Europäisches Patentamt

European Patent Office

Office européen des brevets

(19)

(11) Publication number: **0 380 685**

**A1**

(12)

# EUROPEAN PATENT APPLICATION
## published in accordance with Art. 158(3) EPC

(21) Application number: 89907311.8

(22) Date of filing: 27.06.89

(86) International application number: PCT/JP89/00641

(87) International publication number: WO 90/01184 (08.02.90 90/04)

(51) Int. Cl.⁵: **G05B 19/18**

(30) Priority: 26.07.88 JP 186605/88

(43) Date of publication of application: 08.08.90 Bulletin 90/32

(84) Designated Contracting States: **DE FR GB**

(71) Applicant: **FANUC LTD** 3580, Shibokusa Aza-Komanba Oshino-mura Minamitsuru-gun Yamanashi 401-05(JP)

(72) Inventor: **KAWAMURA, Hideaki** 1375-5, Naraharamachi Hachioji-shi Tokyo 193(JP) Inventor: **SASAKI, Takao** Estate Hachioji 2-502 469-4, Kobikimachi Hachioji-shi Tokyo 193(JP) Inventor: **MURAKAMI, Kunihiko** Hirayamadaijutaku 1008 6-7-8, Asahigaoka Hino-shi Tokyo 191(JP)

(74) Representative: Brunner, Michael John et al GILL JENNINGS & EVERY 53-64 Chancery Lane London WC2A 1HN(GB)

(54) **NC COMMAND SYSTEM.**

(57) An NC command system for a CNC lathe having a plurality of independently position-controllable tool boxes (1, 2), and a rotary shaft (C) which is position-controllable with respect to the tool boxes (1, 2). This system is constructed so that contouring control operations for the rotary shaft (C) and tool boxes (1, 2) are switched in accordance with a machining program. Therefore, a parameter setting operation is not required, and a machining efficiency is improved.

Fig.1

D E S C R I P T I O N


NC COMMAND SYSTEM


Technical Field

The present invention relates to an NC command system for a CNC lathe, and more particularly, to an NC command system in which the combination of an axis of rotation and a plurality of tool posts is switched in accordance with machining programs.


Background Art

CNC lathes in which a number of tool posts are arranged so that a workpiece can be machined by a plurality of tools, to speed up the machining of the workpiece, are widely used.

In these CNC lathes, contouring control is effected between one of the tool posts and a C-axis which is position-controlled with respect to the same axis of rotation of a spindle. The tool post to be combined with the C-axis for the contouring control is set by parameters of a numerical control device and the like.

Since the tool post capable of being combined with the C-axis for the contouring control is fixed by parameters and the like, however, only one of the tool posts can be combined with the C-axis to execute the contouring control, and thus the machining programs are not flexible. Moreover, to effect a contouring control between another tool post and the C-axis, it is necessary to stop the operation of the numerical control device and change the set parameters, and thus the machining operation becomes complicated.

## Disclosure of the Invention

The present invention was created in consideration of these circumstances, and an object thereof is to provide an NC command system in which the combination of an axis of rotation and a plurality of tool posts is switched in accordance with machining programs.

To solve the above problems, according to the present invention, there is provided an NC command system for a CNC lathe having a plurality of tool posts capable of independent position control and an axis of rotation capable of position control relative to the tool posts, the NC command system being characterized in that contouring control between the axis of rotation and the tool posts is switched in accordance with machining programs.

Since the tool post to be combined with a C-axis for the contouring control can be ordered in accordance with the machining programs, parameters and the like need not be set in the course of the machining programs, whereby the machining efficiency is improved.

## Brief Description of the Drawings

Fig. 1 is a diagram showing the relationships between a spindle and tool posts of a CNC lathe having two tool posts according to the present invention;

Fig. 2 is a diagram showing examples of machining programs; and

Fig. 3 is a block diagram of a numerical control device for effecting the present invention.

## Best Mode of Carrying Out the Invention

One embodiment of the present invention will now be described with reference to the drawings.

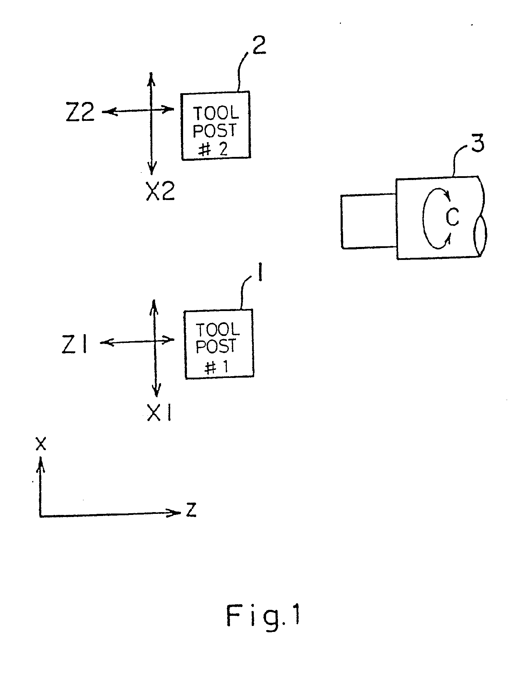

Figure 1 shows the relationship between a spindle and a cutting tool of a CNC lathe having, e.g., two tool posts, according to the present invention. In Fig. 1, numeral 1 denotes a first tool post, which is controlled in X- and Z-directions along X1- and Z1-axes, respectively; and 2 denotes a second tool post, which is controlled in X- and Z-axis directions along X2- and Z2-axes, respectively.

Numeral 3 denotes the spindle, which is rotated at a fixed speed. At the time of a machining process, such as fluting, the spindle 3 is position-controlled as the C-axis, to execute a contouring control with the tool posts.

Here the C-axis can conduct the contouring control with either of the first and second tool posts 1 and 2, and the combination can be switched in accordance with machining programs.

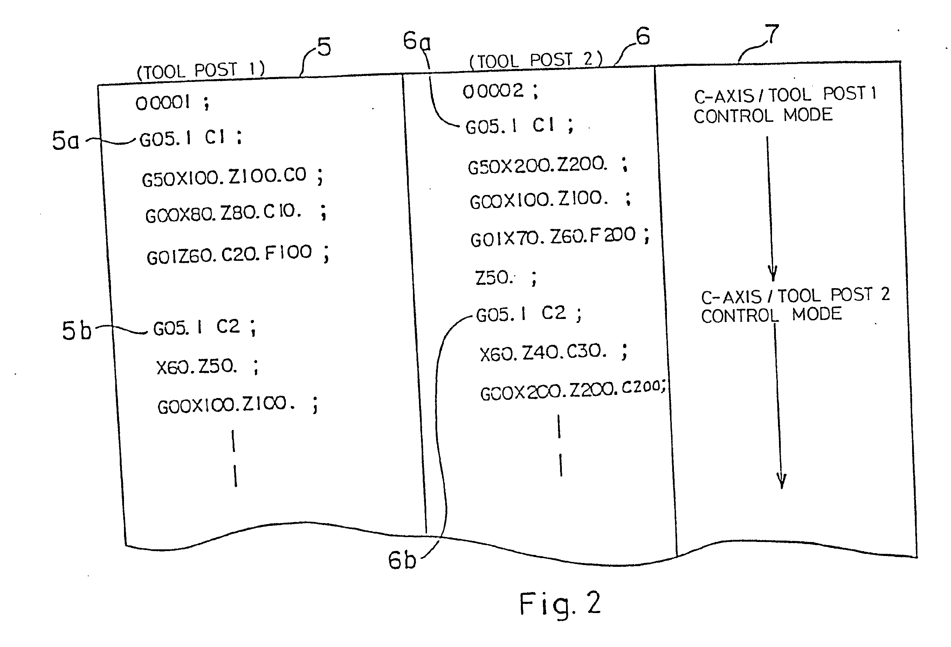

Figure 2 shows examples of the machining programs. In Fig. 2, 5 designates a machining program for controlling the first tool post 1, and 6 designates a machining program for controlling the second tool post 2. These machining programs 5 and 6 are executed in parallel with each other. Numeral 7 designates a control mode indicating the tool post to be combined with the C-axis for the contouring control, and 5a and 6a designate commands for the contouring control between the C-axis and the first tool post 1; the commands being given in accordance with the machining programs 5 and 6. More specifically, "G05.1" is a command for selecting the tool post to be combined with the C-axis for the contouring control, and "C1" is a command for the contouring control with the first tool post 1. Namely, the control mode established in accordance with the machining programs 5a and 6a is a C-axis/tool post 1 control mode. "C" in a block without the command "G05.1" simply orders the displacement or coordinate value of the C-axis.

As the machining progresses, "G05.1 C2", which is a command for the contouring control between the C-axis and the second tool post 2, is given as the instruction in accordance with machining programs 5b and 6b, and the control mode is switched over to a C-axis/tool post 2 control mode.

In this manner, the tool post to be combined with the C-axis for the contouring control can be selected in accordance with the command from the machining programs, and a contouring control with either of the tool posts can be executed without changing set parameters and the like.

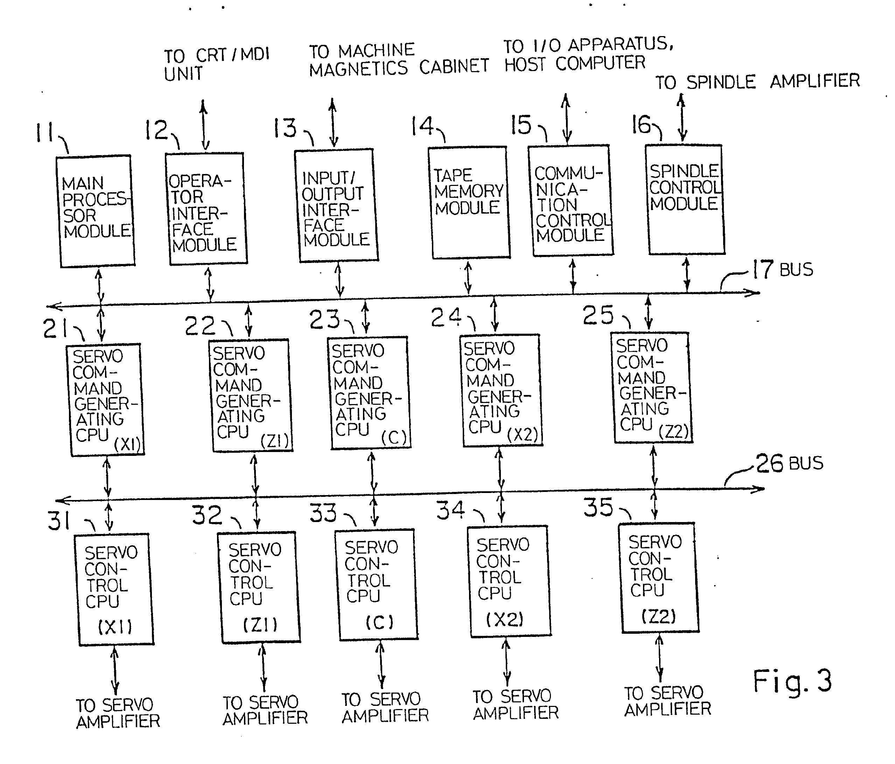

Figure 3 shows a block diagram of a numerical control device for effecting the present invention. In Fig. 3, 11 denotes a main processor module for global control, which controls data other than servo commands. Although only one main processor module is shown in Fig. 3, a plurality of main processor modules are used depending on the size of the system.

Numeral 12 denotes an operator interface module, which is connected to a CRT/MDI unit including a display device and a keyboard, and 13 denotes an input/output interface module, which receives input signals from the machine side and delivers signals for driving a magnet of a machine magnetics cabinet and the like.

Numeral 14 denotes a tape memory module, which stores the machining programs. A bubble memory or a RAM backed up by a battery may be used as a memory element.

Numeral 15 denotes a communication control module, which, connecting a host computer and the numerical control device, performs the management of machining processes, reception of the machining programs, and transmission of machining data, etc. Further, the module 15 can be connected to an I/O apparatus, such as a floppy disk drive unit, hard disk drive unit, etc. Numeral 16 denotes a spindle control module, which controls the rotating speed of the spindle and orientation, etc., and is connected to a spindle amplifier. These modules are connected to a multi-master bus 17.

Numerals 21 to 25 denote servo command generating processors, which receive machining program data from the main processor 1, and produce servo commands for the X1-, Z1-, C-, X2-, and Z2-axes, respectively, shown in Fig. 1, and 26 denotes a bus through which only the servo commands or data on servo control are transferred.

Numerals 31 to 35 denote servo control processors, which control the X1-, Z1-, C-, X2-, and Z2-axes, respectively, and are connected to their corresponding servo amplifiers.

According to the present invention, as described above, the tool post to be combined with the C-axis for the contouring control can be ordered in accordance with the machining programs, so that the parameters and the like need not be set in the course of the machining programs, and thus the machining efficiency is improved.

CLAIMS

1. In an NC command system for a CNC lathe having a plurality of tool posts capable of independent position control and an axis of rotation capable of position control relative to said tool posts,

the NC command system being characterized in that contouring control between said axis of rotation and said tool posts is switched in accordance with machining programs.

2. An NC command system according to claim 1, characterized in that said switching is effected by using G-codes.

EP 0 380 685 A1

Fig.1

**Fig. 2**

EP 0 380 685 A1

TO CRT/MDI UNIT   TO MACHINE MAGNETICS CABINET   TO I/O APPARATUS, HOST COMPUTER   TO SPINDLE AMPLIFIER

11 — MAIN PROCESSOR MODULE

12 — OPERATOR INTERFACE MODULE

13 — INPUT/OUTPUT INTERFACE MODULE

14 — TAPE MEMORY MODULE

15 — COMMUNICATION CONTROL MODULE

16 — SPINDLE CONTROL MODULE

17 BUS

21 — SERVO COMMAND GENERATING CPU (X1)

22 — SERVO COMMAND GENERATING CPU (Z1)

23 — SERVO COMMAND GENERATING CPU (C)

24 — SERVO COMMAND GENERATING CPU (X2)

25 — SERVO COMMAND GENERATING CPU (Z2)

26 BUS

31 — SERVO CONTROL CPU (X1)

32 — SERVO CONTROL CPU (Z1)

33 — SERVO CONTROL CPU (C)

34 — SERVO CONTROL CPU (X2)

35 — SERVO CONTROL CPU (Z2)

TO SERVO AMPLIFIER   TO SERVO AMPLIFIER   TO SERVO AMPLIFIER   TO SERVO AMPLIFIER   TO SERVO AMPLIFIER

Fig. 3

EP 0 380 685 A1

# INTERNATIONAL SEARCH REPORT

International Application No PCT/JP89/00641

## I. CLASSIFICATION OF SUBJECT MATTER (if several classification symbols apply, indicate all) 6

According to International Patent Classification (IPC) or to both National Classification and IPC

Int. Cl$^4$    G05B19/18

## II. FIELDS SEARCHED

| Minimum Documentation Searched 7 | |
|---|---|
| Classification System | Classification Symbols |
| IPC | G05B19/18 |

| Documentation Searched other than Minimum Documentation to the Extent that such Documents are Included in the Fields Searched 8 |
|---|
| Jitsuyo Shinan Koho        1971 – 1989<br>Kokai Jitsuyo Shinan Koho  1971 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 61-131105 (Fanuc Ltd.)<br>18 June 1986 (18. 06. 86)<br>Page 2, upper left column, line 7 to<br>lower right column, line 9 | 1, 2 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 12, 1989 (12. 09. 89) | September 25, 1989 (25. 09. 89) |
| International Searching Authority | Signature of Authorized Officer |
| Japanese Patent Office | |

Form PCT/ISA/210 (second sheet) (January 1985)